# EUROPEAN PATENT APPLICATION

(11) **EP 3 920 304 A1**
(43) Date of publication of application: **08.12.2021**
(21) Application number: 20747845.4
(22) Date of filing: 30.01.2020
(51) Int. Cl.: H01M 10/0585, H01M 2/22, H01M 10/0562

(54) **SOLID-STATE BATTERY AND METHOD FOR PRODUCING SAME**

(30) Priority: 31.01.2019 JP 2019016094
(71) Applicant: Murata Manufacturing Co., Ltd., Nagaokakyo-shi, Kyoto 617-8555 (JP)
(72) Inventor: MATSUKI, Yoshitaka, Nagaokakyo-shi, Kyoto 617-8555 (JP); INOUE, Hiroaki, Nagaokakyo-shi, Kyoto 617-8555 (JP); HINO, Daisuke, Nagaokakyo-shi, Kyoto 617-8555 (JP); SATO, Susumu, Nagaokakyo-shi, Kyoto 617-8555 (JP)
(74) Representative: Witte, Weller & Partner Patentanwälte mbB
(86) International application number: PCT/JP2020/003505
(87) International publication number: WO 2020/158884

(57) **Abstract**

Provided is a solid-state battery in which single cell bodies as a solid-state thin film battery are more suitably stacked. In the solid-state battery of the present invention, an adhesive layer is provided between a plurality of stacked single cell bodies and the adhesive layer covers each cell element portion.

## Description

### TECHNICAL FIELD

The present invention relates to a solid-state battery. More specifically, the present invention relates to a solid-state battery in which single cells having a thin film disposed on a substrate are combined so as to be stacked one on another, and a method for manufacturing the same.

### BACKGROUND ART

Hitherto, secondary batteries that can be repeatedly charged and discharged have been used for various purposes. For example, secondary batteries are used as a power source for various devices such as smartphones and notebook computers, and the like.

In secondary batteries, liquid electrolytes are generally used as a medium for ion movement that contributes to charge and discharge. That is, so-called electrolytic solutions are used in secondary batteries. However, in such secondary batteries, safety is generally required from the viewpoint of preventing leakage of the electrolytic solutions. The organic solvent and the like used in electrolytic solutions are flammable substances, and safety is required in that point of view as well.

Hence, studies have been conducted on solid-state batteries in which solid electrolytes are used instead of electrolytic solutions.

### PRIOR ART DOCUMENTS

### PATENT DOCUMENTS

Patent Document 1: Japanese Patent Application Laid-Open No. 2015-167117
Patent Document 2: Japanese Patent Application Laid-Open No. 9-237639
Patent Document 3: Japanese Patent Application Laid-Open No. 2006-185662
Patent Document 4: Japanese Patent Application Laid-Open No. 2010-231969
Patent Document 5: Japanese Patent Application Laid-Open No. 2018-152280

### SUMMARY OF THE INVENTION

### Problem to be solved by the invention

For example, as a solid-state battery, there is a solid-state thin film battery having a thin film disposed on a substrate. In such a solid-state thin film battery, individual elements (current collector, active material, electrolyte, and the like) constituting the battery are formed of thin films to form a battery. Stacked solid-state thin film batteries in which such solid-state thin film batteries are combined so as to be stacked one on another have also been proposed (Patent Documents 1 to 5 above). Such a solid-state battery is desirable from the viewpoint of increasing the capacity since the single cell bodies as a solid-state thin film battery are electrically connected to one another in parallel.

However, as a result of diligent studies on such a solid-state battery by the inventors of the present application, it has been found that there are still problems to be overcome. Specifically, the inventors of the present application have found out that there are the following problems.

When it is assumed that the single cells are stacked in the direction perpendicular to the substrate, it is necessary to mechanically bond the single cells to one another. However, none of Patent Documents 1 to 3 above has a configuration in which an adhesive layer is introduced into the whole space between the single cells. Therefore, in the batteries of Patent Documents 1 to 3, there are concerns about interlayer delamination of the stacked single cells, insufficient mechanical strength of the stacked single cells, and the like. When interlayer delamination occurs, the formation of side electrodes to be performed after stacking of the single cells may cause a short circuit. Specifically, when interlayer delamination occurs, the material for the conductor that functions as a side electrode easily penetrates between the single cells and thus there is a concern that a short circuit occurs when the material reaches the electrode on the opposite side. In the solid-state thin film battery of Patent Document 4, an adhesive layer is introduced into the space between the respective single cells. However, the adhesive layer having the structure proposed in Patent Document 4 does not have the function of sealing the solid electrolyte from the outside air and also does not have the function of securing insulation between the positive and negative electrodes in each single cell. In order to have the sealing function and the insulating function in the battery of Patent Document 4, it is necessary to additionally form an element separate from the adhesive layer and this complicates the process. In the solid-state battery of Patent Document 5, it has been proposed that a sealing layer is formed on each single cell before being stacked using BCB (benzocyclobutene) resin. That is, the sealing layer is once formed and then the single cells are combined with one another. Patent Document 5 does not describe a specific method for mechanically bonding the single cells although the single cells are combined together. At least the BCB resin itself that is cured in advance to seal each single cell cannot be an adhesive layer, and an adhesive agent is separately required for the bonding of single cells in the battery proposed in Patent Document 5.

The present invention has been made in view of such a problem. In other words, a main object of the present invention is to provide a solid-state battery in which single cell bodies as a solid-state thin film battery are more suitably stacked.

### Means for solving the problem

The inventors of the present application have attempted to solve the above problems by dealing with the problems in a new direction instead of dealing with the problems as an extension of the prior art. As a result, the invention of a solid-state battery by which the main object is achieved has been completed.

The present invention provides a solid-state battery, which includes a plurality of single cell bodies and in which each of the single cell bodies includes a substrate and a cell element provided on the substrate, one of a positive electrode layer or a negative electrode layer is stacked on the other with a solid electrolyte layer interposed therebetween in the cell element, an adhesive layer is provided between the plurality of single cell bodies, and the adhesive layer covers the cell element.

The present invention also provides a method for manufacturing a solid-state battery. The manufacturing method of the present invention is a method for manufacturing a solid-state battery including a plurality of single cell bodies stacked one on another, which includes (i) a step of fabricating a single cell body including a substrate and a cell element provided on the substrate, in which one of a positive electrode layer or a negative electrode layer is stacked on the other with a solid electrolyte layer interposed therebetween in the cell element and (ii) a step of pasting a plurality of the single cell bodies to one another with an adhesive layer interposed therebetween and in which a precursor of the adhesive layer is provided between the plurality of single cell bodies and a pressing force is applied to the plurality of single cell bodies to cover the cell element with the precursor of the adhesive layer in the step (ii).

### Advantageous effect of the invention

In the present invention, a solid-state battery in which a single cell bodies (hereinafter, also referred to as a "single cells") as a solid-state thin film battery are more suitably stacked is obtained.

Specifically, an adhesive layer is provided between the plurality of single cell bodies, and peeling off of the respective single cells from one another can be suppressed. In particular, such an adhesive layer covers the cell element of each single cell, and peeling off can be effectively suppressed.

Since the adhesive layer "covers", the adhesive layer between the single cells covers throughout the whole upper face of the cell element of each single cell and may decrease a local stress caused to the single cell at the time of bonding and stacking. Since the adhesive layer "covers", the adhesive layer may exhibit not only the action of sealing the solid electrolyte layer from the outside air but also the action of securing the insulation between the positive and negative electrodes of each single cell. That is, in the present invention, it is not necessary to additionally introduce a separate layer having a sealing function and an insulating function and thus the height dimension of the solid-state battery can be decreased and the manufacturing process can be simplified.

The effects described in the present specification are merely exemplary and are not limited, and there may be additional effects.

### BRIEF EXPLANATION OF DRAWINGS

FIG. 1 is a schematic diagram illustrating a configuration of a single cell/single cell body (FIG. 1(A): sectional view and FIG. 1(B): upper plan view).
FIG. 2 is a schematic sectional view illustrating a configuration of a solid-state battery according to an embodiment of the present invention.
FIG. 3 is a schematic sectional view illustrating a configuration of a solid-state battery according to an embodiment of the present invention.
FIG. 4 is a schematic sectional view illustrating another configuration of a single cell/single cell body.
FIG. 5 is a schematic sectional view illustrating another configuration of a solid-state battery according to an embodiment of the present invention.
FIG. 6 is a schematic sectional view for explaining an exemplary embodiment in which a precursor of an adhesive layer is used to cover a cell element.
FIG. 7 is a schematic sectional view for explaining an exemplary embodiment in which a soft precursor of an adhesive layer is used to cover a cell element.
FIGS. 8(A) to 8(C) are schematic process sectional views for explaining a process of obtaining a solid-state battery according to an embodiment of the present invention.
FIG. 9 is a schematic process sectional view for explaining a process of obtaining a solid-state battery according to an embodiment of the present invention.
FIG. 10 is a schematic process sectional view for explaining a process of obtaining a solid-state battery according to an embodiment of the present invention.
FIGS. 11(A) and 11(B) are schematic process sectional views for explaining a process of obtaining a solid-state battery according to an embodiment of the present invention.

### MODE FOR CARRYING OUT THE INVENTION

Hereinafter, the solid-state battery and the method for manufacturing the same according to the present invention will be described in detail. Although the description will be given with reference to the drawings if necessary, the contents illustrated are merely schematic and exemplary for the purpose of understanding the present invention, and the appearance, dimensional ratio, and the like may differ from the actual ones.

The "solid-state battery" as used in the present invention refers to a battery of which the constituents are formed of solids in a broad sense and refers to an all-solid-state battery in which the battery constituents (particularly preferably all battery constituents) are formed of solids in a narrow sense. Such a "solid-state battery" includes not only a so-called "secondary battery" capable of being repeatedly charged and discharged but also a "primary battery" capable of only being discharged. According to a certain suitable aspect of the present invention, a "solid-state battery" is a secondary battery. However, the "secondary battery" is not overly bound by its name and may include, for example, a power storage device.

In a certain suitable aspect, the solid-state battery in the present invention is a stacked solid-state battery in which single cells (hereinafter, also referred to as "single cell bodies") as a solid-state thin film battery are combined so as to be stacked. The single cell body itself is a so-called "solid-state thin film battery" (particularly a thin-film all-solid-state battery), thus includes a substrate, and is configured so that the respective thin film layers (positive electrode layer, negative electrode layer, and electrolyte layer) forming the single cell element are stacked on the substrate.

The "sectional view" as used in the present specification is based on the form when viewed from a direction substantially perpendicular to the thickness direction based on the stacking direction of the respective layers (namely, thin film layers) constituting the single cell/single cell body. In short, the "sectional view" is based on the form when the solid-state battery is cut out on a plane parallel to the thickness direction. The "vertical direction" and "horizontal direction" used directly or indirectly in the present specification correspond to the vertical direction and the horizontal direction in the drawings, respectively. Unless otherwise stated, the same reference numerals or symbols shall indicate the same members/parts or the same meanings. In a certain suitable aspect, it can be considered that the vertical downward direction (namely, the direction in which gravity acts) corresponds to the "downward direction" and the opposite direction corresponds to the "upward direction".

In a broad sense, the "solid-state thin film battery" as used in the present specification refers to a battery obtained by forming the respective layers constituting a cell element to be stacked on a substrate (preferably by forming the respective layers so as to be sequentially stacked on the substrate). In a narrow sense, the "solid-state thin film battery" means a solid-state battery obtained by forming the respective layers constituting a cell element as thin films of about 10 nm to 20 µm to be stacked on a substrate. In one certain exemplary embodiment, the solid-state thin film battery is a solid-state battery obtained by stacking thin films on a substrate by a gas phase method.

The various numerical value ranges as used in the present specification are intended to include the lower and upper limit numerical values themselves unless otherwise stated. That is, when a numerical value range of 1 to 10 is taken as an example, the numerical range may be interpreted to include the lower limit value "1" and the upper limit value "10" unless otherwise stated.

### [Solid-state battery]

The solid-state battery of the present invention is a solid-state battery in which single cell bodies (hereinafter, also referred to as "single cells") as a solid-state thin film battery are combined so as to be stacked. In the following, the details of a configuration example of the single cell body will be first described and then an overall configuration example of a stacked solid-state battery (assembled battery) in which a plurality of single cell bodies are stacked will be described in detail.

### (Single cell)

A single cell is typically a lithium secondary battery in which lithium that is a reactant (hereinafter referred to as an electrode reactant) in the electrode reaction moves between a pair of positive and negative electrodes as the lithium secondary battery is charged and discharged. In the present specification, a lithium secondary battery includes a battery in which lithium metal is deposited on the negative electrode at the time of charge. A single cell is typically a battery in which, for example, cell elements such as a pair of positive and negative electrodes and a solid electrolyte including a substrate are stacked one on another. Preferably, the single cell is a thin-film type solid electrolyte secondary battery (all-solid-state battery) in which cell elements such as a pair of positive and negative electrode layers and a solid electrolyte layer are all formed of a thin film.

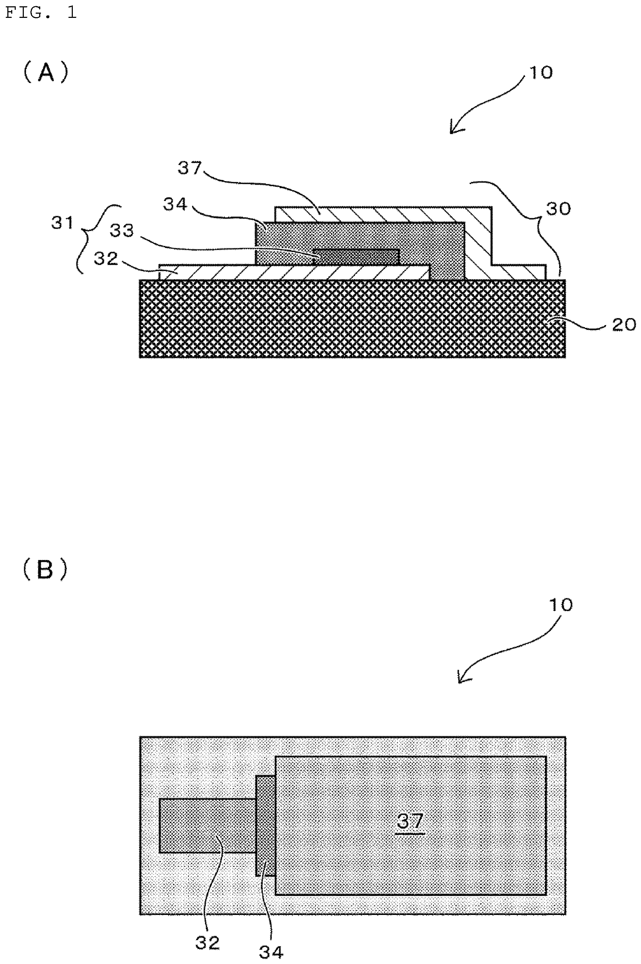

As illustrated in FIG. 1, in the present invention, a single cell 10 includes a substrate 20 and a cell element 30 provided on the substrate, and one of the positive electrode layer or the negative electrode layer is stacked on the other with the solid electrolyte layer interposed therebetween in the cell element 30. In short, such a single cell includes a substrate, a positive electrode layer and a negative electrode layer that are formed on the substrate, and a solid electrolyte layer formed between these electrode layers.

In the illustrated single cell 10, a positive electrode layer 31 is provided directly on the substrate 20, and a solid electrolyte layer 34 is provided on the positive electrode layer, and a negative electrode layer 37 is provided on the solid electrolyte layer 34. More specifically, the cell element 30 in which a positive electrode current collector layer 32, a positive electrode active layer 33, the solid electrolyte layer 34, and the negative electrode layer 37 are stacked in this order is included, and all of these are provided on the substrate 20. In the cell element 30, the current is taken out to the outside through the positive electrode current collector layer 32 and the negative electrode layer 37 when the electric energy is stored. The thicknesses of the respective layers constituting the cell element 30, namely, the positive electrode current collector layer 32, the positive electrode active layer 33, the solid electrolyte layer 34, and the negative electrode layer 37 are, for example, about 10 nm to 20 µm.

The substrate 20 used in the single cell is preferably provided as a support for the cell element. Since the respective layers constituting the cell element are typically a "thin film", it can be said that such thin film-like layers are supported by the substrate. As the substrate 20, for example, a substrate formed of an electrically insulating material such as glass, alumina, or resin can be used. The substrate may be a hard substrate or a flexible substrate, and a wide variety of substrates can be used. As the substrate formed of resin (resin substrate), a polycarbonate (PC) resin substrate, a fluororesin substrate, a polyethylene terephthalate (PET) substrate, a polybutylene terephthalate (PBT) substrate, a polyimide (PI) substrate, a polyamide (PA) substrate, a polysulfone (PSF) substrate, a polyethersulfone (PES) substrate, a polyphenylene sulfide (PPS) substrate, a polyetheretherketone (PEEK) substrate, a polyethylene naphthalate (PEN) substrate, and/or a cycloolefin polymer (COP) substrate can be used.

The thickness of the substrate 20 is not particularly limited. However, a thinner substrate can increase the capacity of the solid-state battery. This is because the ratio of the substrate thickness that does not contribute to the battery function to the total height of the solid-state battery decreases. Hence, the substrate thickness is preferably 50 µm or less, more preferably 20 µm or less. It is preferable to use a resin material for such a thin substrate thickness since the use of brittle materials such as glass and/or ceramics as the substrate material increases the difficulty of handling. The substrate containing a resin material has an advantage of imparting flexibility to the solid-state battery so that the solid-state battery can be mounted on a curved surface. Furthermore, when a material exhibiting low hygroscopicity is used as the substrate material, the deterioration of solid-state battery can be suppressed or diminished. This is because the penetration of water vapor from an external environment can be suppressed or diminished. From this point of view, the substrate material is preferably a material containing, for example, polyimide, polyamide, and/or polyethylene terephthalate.

The positive electrode layer 31 that constitutes the cell element of the single cell may have a two-layer structure consisting of the positive electrode current collector layer 32 and the positive electrode active layer 33. Specifically, the positive electrode layer 31 may be composed of two layers of the positive electrode current collector layer 32 formed on the substrate and the positive electrode active layer 33 directly formed on the positive electrode current collector layer.

As illustrated in FIG. 1, the positive electrode current collector layer 32 is provided directly on, for example, the substrate 20. Examples of the material constituting the positive electrode current collector layer 32 include at least one selected from the group consisting of Cu, Mg, Ti, Cr, Fe, Co, Ni, Zn, Al, Ge, In, Au, Pt, Ag, and Pd or an alloy containing at least one selected from such a group. The thickness of the positive electrode current collector layer 32 is not particularly limited but may be 10 nm to 20 µm. In a certain aspect, the positive electrode current collector layer 32 may extend so as to protrude from the positive electrode active layer 33 as illustrated in FIG. 1.

As illustrated in FIG. 1, the positive electrode active layer 33 is provided directly on the positive electrode current collector layer 32. The positive electrode active layer 33 typically contains a positive electrode active material. The thickness of the positive electrode active layer 33 is not particularly limited but may be 10 nm to 20 µm.

The positive electrode active material of the positive electrode active layer is preferably a material that easily releases and stores lithium ions and can release and store a large number of lithium ions in the positive electrode active layer 33. Materials having high potentials and low electrochemical equivalents are preferred. Examples thereof include oxides or phosphate compounds containing Li and at least one selected from the group consisting of Mn, Co, Fe, P, Ni, Si, Cr, Au, Ag, and Pd or sulfur compounds. Specific examples thereof include lithium-manganese oxides such as LiMnO₂ (lithium manganate), LiMn₂O₄, and/or Li₂Mn₂O₄, lithium-cobalt oxides such as LiCoO₂ (lithium cobaltate) and/or LiCo₂O₄, lithium-nickel oxides such as LiNiO₂ (lithium nickelate) and/or LiNi₂O₄, and/or Lithium-manganese-cobalt oxides such as LiMnCoO₄ and Li₂MnCoO₄, Lithium-titanium oxides such as Li₄Ti₅O₁₂ and/or LiTi₂O₄, and LiFePO₄ (lithium iron phosphate), titanium sulfide (TiS₂), molybdenum sulfide (MoS₂), iron sulfide (FeS, FeS₂), copper sulfide (CuS), nickel sulfide (Ni₃S₂), bismuth oxide (Bi₂O₃), bismuth leadate (Bi₂Pb₂O₅), copper oxide (CuO), vanadium oxide (V₆O₁₃), and/or niobium selenate (NbSe₃). It is also possible to use these in mixture. When the film forming property, battery cycle stability, and/or potential are considered, a lithium composite oxide containing Co or Mn and Li such as LiCoO₂ and/or LiMnO₂ is preferable.

The positive electrode active layer 33 may contain an amorphous lithium phosphate compound. For example, the positive electrode active layer 33 contains an amorphous lithium phosphate compound composed of Li, P, at least one element M1 selected from the group consisting of Ni, Co, Mn, Au, Ag, and Pd, and O.

Such a lithium phosphate compound has at least one of the following excellent properties as a positive electrode active material. In other words, such a lithium phosphate compound has a high potential with respect to Li⁺/Li. Such a lithium phosphate compound is excellent in the flatness of potential, that is, the potential fluctuation accompanying the composition change is small.

Such a lithium phosphate compound also has a large composition ratio of lithium and thus has a large capacity. Such a lithium phosphate compound exhibits high electrical conductivity. Unlike a crystalline positive electrode active material, such a lithium phosphate compound does not undergo the collapse of crystal structure due to repeated charge and discharge and thus exhibits excellent charge and discharge cycle characteristics. Such a lithium phosphate compound can be formed by an anneal-less process, and thus the process can be simplified, the yield can be improved, and/or a resin substrate can be used.

Although it is merely an example, the positive electrode active layer 33 may contain a lithium phosphate compound represented by Formula (1) as the lithium phosphate compound as described above.

LiₓNi_{y}PO_{z} Formula (1)

(Where x indicates the composition ratio of lithium. y indicates the composition ratio of nickel. z indicates the composition ratio of oxygen. x is 0 < x < 8.0. y is 2.0 ≤ y ≤ 10. z is a ratio in which oxygen is stably contained depending on the composition ratios of Ni and P.)

In Formula (1), the range of the lithium composition ratio x is preferably 0 < x < 8 since the limit at which the potential is maintained is the upper limit value of the lithium composition ratio x. The range of the lithium composition ratio x is more preferably 1.0 ≤ x < 8. This is because the impedance is large and charge/discharge cannot be performed when the lithium composition ratio x is less than 1.0. In Formula (1), the range of the Ni composition ratio y is preferably 2.0 ≤ y ≤ 10.0 from the viewpoint of obtaining a sufficient charge/discharge capacity. For example, the charge/discharge capacity sharply decreases when the Ni composition ratio y is less than 2.0. The upper limit of the Ni composition ratio y is not particularly limited, but the charge/discharge capacity gradually decreases when the Ni composition ratio y exceeds 4. The Ni composition ratio y is preferably 10 or less when about a half of the maximum capacity is taken as the guide. In Formula (1), the oxygen composition ratio z is a ratio in which oxygen is stably contained depending on the Ni composition ratio and the P composition ratio.

The positive electrode active layer 33 may contain an amorphous lithium phosphate compound represented by Formula (2) .

LiₓCu_{y}PO₄ Formula (2)

(Where x indicates the composition ratio of lithium. y indicates the composition ratio of copper.)

The amorphous lithium composite oxide represented by Formula (2) has at least one of the following excellent properties as a positive electrode active material. In other words, such a lithium phosphate compound has a high potential with respect to Li⁺/Li. Such a lithium phosphate compound is excellent in the flatness of potential, that is, the potential fluctuation accompanying the composition change is small. Such a lithium phosphate compound also has a large composition ratio of lithium and thus has a large capacity. Such a lithium phosphate compound exhibits high electrical conductivity. Unlike a crystalline positive electrode active material, such a lithium phosphate compound does not undergo the collapse of crystal structure due to repeated charge and discharge and thus exhibits excellent charge and discharge cycle characteristics. Such a lithium phosphate compound can be formed by an anneal-less process, and thus the process can be simplified, the yield can be improved, and/or a resin substrate can be used. In the lithium phosphate compound represented by Formula (2), the range of the lithium composition ratio x is, for example, 0.5 ≤ x < 7.0 and may be 5 < x < 7.0. In the lithium phosphate compound represented by Formula (2), the range of the copper composition ratio y is preferably 1.0 ≤ y ≤ 4.0 from the viewpoint of obtaining a sufficient charge/discharge capacity. For example, the charge/discharge capacity sharply decreases when the copper composition ratio y is less than 1.0. The upper limit of the copper composition ratio y is not particularly limited, but the charge/discharge capacity gradually decreases when the composition ratio y exceeds 3. The copper composition ratio y is preferably 4 or less when about a half of the maximum capacity is taken as the guide, but it is also possible to have a composition of 4 or more at the expense of charge/discharge capacity when there are advantages in terms of durability and/or ionic conductance. In the lithium phosphate compound represented by Formula (2), the lower limit of the copper composition ratio y is more preferably 2.2 ≤ y from the viewpoint of obtaining favorable charge/discharge cycle characteristics.

The composition of the lithium phosphate compound constituting the positive electrode active layer 33 can be determined, for example, as follows. A single-layer film similar to the positive electrode active layer 33 is formed on quartz glass under the same film forming conditions as those for the positive electrode active layer 33. Thereafter, the composition analysis of this single-layer film is performed by X-ray photoelectron spectroscopy (XPS).

In a solid-state battery, it is preferable to increase the capacity of the positive electrode active material in order to improve the energy density. Hence, examples of the high-capacity positive electrode active material include metal composite oxides (for example, LiₓCoO₂, LiₓNiO₂, and/or LiₓMn₂O₄) that are roughly classified into a rock salt type layered structure and a spinel type structure. The positive electrode active layer 33 may contain an amorphous lithium phosphate compound composed of Li, P, at least one element M1 selected from the group consisting of Ni, Co, Mn, Au, Ag, and Pd, at least one element M2 (where M1 # M2) selected from the group consisting of Ni, Co, Mn, Au, Ag, Pd, and Cu, and O. For example, by appropriately selecting the element M1 and the element M2 in such a lithium phosphate compound, a positive electrode active material exhibiting superior properties can be obtained. For example, when the positive electrode active layer 33 contains an amorphous lithium phosphate compound composed of Li, P, Ni (element M1), Cu (element M2), and O, the charge/discharge cycle characteristics can be further improved. For example, when the positive electrode active layer 33 contains an amorphous lithium phosphate compound composed of Li, P, Ni (element M1), Pd (element M2), and O, the capacity and the charge/discharge cycle characteristics can be further improved. For example, when the positive electrode active layer 33 contains an amorphous lithium phosphate compound composed of Li, P, Ni (element M1), Au (element M2), and O, the charge/discharge cycle characteristics can be further improved. Furthermore, the positive electrode active layer 33 may contain an amorphous lithium phosphate compound composed of Li, P, at least one element M1 selected from the group consisting of Ni, Co, Mn, Au, Ag, and Pd, at least one element M2 (where M1 # M2) selected from the group consisting of Ni, Co, Mn, Au, Ag, Pd, and Cu, at least one additive element M3 selected from the group consisting of B, Mg, Al, Si, Ti, V, Cr, Fe, Zn, Ga, Ge, Nb, Mo, In, Sn, Sb, Te, W, Os, Bi, Gd, Tb, Dy, Hf, Ta, and Zr, and O. Furthermore, the positive electrode active layer 33 may contain an amorphous lithium phosphate compound composed of Li, P, at least one element M1' selected from the group consisting of Ni, Co, Mn, Au, Ag, Pd, and Cu, at least one additive element M3 selected from the group consisting of B, Mg, Al, Si, Ti, V, Cr, Fe, Zn, Ga, Ge, Nb, Mo, In, Sn, Sb, Te, W, Os, Bi, Gd, Tb, Dy, Hf, Ta, and Zr, and O. When the additive element M3 is only contained in the lithium phosphate compound, the lithium phosphate compound cannot be used as a positive electrode active material. In other words, when the positive electrode active layer 33 contains an amorphous lithium phosphate compound composed of Li, P, only the additive element M3, and O, the battery is not driven. Meanwhile, when the additive element M3 is contained in the lithium phosphate compound together with the element M1 and the element M2 (M1 # M2) or the element M1', the lithium phosphate compound can be used as a positive electrode active material, and the properties as a positive electrode active material can be improved depending on the selection of the kind of element to be further added. In other words, when the positive electrode active layer 33 contains a lithium phosphate compound having the additive element M3 together with the element M1 and the element M2 (M1 # M2) or the element M1' as well, the battery driving is not affected. When the positive electrode active layer 33 contains a lithium phosphate compound having the additive element M3 together with the element M1 and the element M2 (M1 # M2) or the element M1', there are effects such as improvement in capacity and cycle characteristics and a decrease in internal impedance depending on the selection of the kinds of elements to be added. As the preferable additive element M3, for example, the following may be considered. In other words, it is generally considered that ionic conduction makes it easier for ions to move by disturbing the structure including the conductivity. It is known that the ionic conductance of a solid electrolyte of Li₃PO₄ increases by substituting a part of Li₃PO₄ with nitrogen through doping to obtain Li₃PO_{3.7}N_{0.3}. Meanwhile, in the case of a crystalline material, the ionic conduction path is formed with a structure (crystal) that is as organized as possible, but a method has been adopted in which a part of the material inside the crystal is substituted to generate vacancies and the ionic conduction is thus increased. Hence, there is a common aspect from the viewpoint of increasing the paths through which lithium easily moves inside the solid electrolyte, a material of which the ionic conductance is improved with a crystal material is often effective although the material is an amorphous material, and it is considered that the additive (additive element) of such a material having improved ionic conductance is similarly effective for the amorphous positive electrode active material (amorphous lithium phosphate compound) in the single cell as well.

Examples of the lithium oxide solid electrolyte material that is a material of which the ionic conductance is improved with a crystal material include a large number of materials such as Li_{0.5}La_{0.5}TiO₃ and/or Li_{3.5}Zn_{0.35}GeO₄ in addition to Li_{1.3}Al_{0.3}Ti_{1.7} (PO₄)₃ (LATP). Hence, it is considered that at least one selected from the group consisting of Al, Ti, La, Zn, and Ge that are the additive elements of these materials, Si, V, W, Ga, Ta, Zr, Cr, and Pd can similarly further improve properties such as ionic conductance of an amorphous positive electrode active material in a single cell as well. For example, when the positive electrode active layer 33 contains an amorphous lithium phosphate compound composed of Li, P, Ni (element M1'), at least either of Al or Ti (additional element M3), and O, the internal impedance can be decreased and excellent high-rate discharge characteristics can be obtained. As the internal impedance decreases, the potential changes during high-speed discharge decrease and a battery having a higher potential can be realized. As the internal impedance is low, the ratio (discharge energy/charge energy) of discharge energy to charge energy approaches 1, the energy loss is diminished, the energy efficiency increases, and Joule heat during charge/discharge is diminished, and it is thus expected to have the effect of suppressing heat generation.

The positive electrode active layer 33 is typically a fully amorphous single-phase thin film but does not have a crystalline phase. It can be confirmed that the positive electrode active layer 33 has an amorphous single phase by observing the section with a transmission electron microscope (TEM). In other words, when the section of this positive electrode active layer 33 is observed with a transmission electron microscope (TEM), a state in which crystal grains are not present can be confirmed from the TEM image. The state can also be confirmed from the electron diffraction image.

The solid electrolyte layer 34 constituting the cell element of the single cell is provided so as to be in contact with the positive electrode layer 31. As illustrated in FIG. 1, for example, the solid electrolyte layer 34 may be provided so as to totally cover the positive electrode active layer 33 on the positive electrode current collector layer 32. Examples of the material constituting the solid electrolyte layer 34 include lithium phosphate (Li₃PO₄) and/or Li₃PO₄₋ₓNₓ (generally called "LiPON") in which nitrogen is added to lithium phosphate (Li₃PO₄), LiₓB₂O_{3-y}N_{y}, Li₄SiO₄-Li₃PO₄, and/or Li₄SiO₄-Li₃VO₄. The subscripts x (x > 0) and y (y > 0)) used in the compound indicate the composition ratios of the elements in the formula. The thickness of the solid electrolyte layer 34 is not particularly limited but may be 10 nm to 20 µm.

The negative electrode layer 37 constituting the cell element of the single cell is provided so as to be in contact with the solid electrolyte layer 34. In particular, the negative electrode layer 37 is provided so as to be in contact with the surface on the opposite side to the surface of the solid electrolyte layer with which the positive electrode layer 31 is in contact. As illustrated in FIG. 1, the negative electrode layer 37 may be provided so as to largely cover the solid electrolyte layer 34 that encloses the positive electrode active layer 33. Examples of the material constituting the negative electrode layer 37 include at least one selected from the group consisting of Cu, Mg, Ti, Cr, Fe, Co, Ni, Zn, Al, Ge, In, Au, Pt, Ag, and Pd or an alloy containing at least one selected from such a group. The thickness of the negative electrode layer 37 is not particularly limited but may be 10 nm to 20 µm.

In a certain suitable aspect, the cell element 30 is not provided with a negative electrode active layer.

That is, the negative electrode layer 37 is formed of a monolayer (single layer). This is because a negative electrode active material may be generated between the negative electrode layer 37 and the solid electrolyte layer 34 as the solid-state battery is charged. For example, Li is generated between the negative electrode layer 37 and the solid electrolyte layer 34, and as a result, for example, a layer (Li-excess layer) containing an excessive amount of Li metal and/or Li may be formed. Such Li (Li-excess layer) can be used as a negative electrode active material. In other words, by using the excessively deposited Li (Li-excess layer) as the negative electrode active material, a single cell is obtained which exhibits high durability against repeated charge/discharge without impairing the charge/discharge characteristics.

In view of the cell element 30 in which "Li" is involved as described above, the solid-state thin film battery forming the single cell body in the present invention can also be referred to as a "solid-state thin film lithium battery".

### (Solid-state battery of present invention)

The solid-state battery of the present invention is a battery including a plurality of single cells. More specifically, the solid-state battery corresponds to a stacked all-solid-state thin-film battery in which a plurality of single cell bodies as a solid-state thin film battery are stacked. The "single cell" related to the solid-state battery of the present invention is also referred to as a "single cell body" for convenience of explanation but substantially corresponds to the above-described single cell.

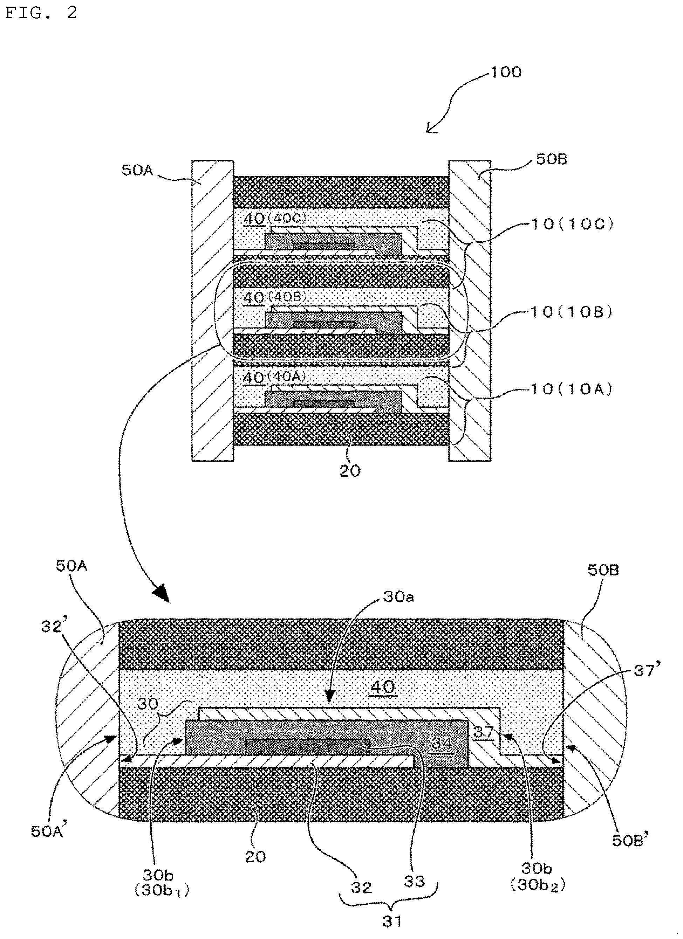

As illustrated in FIG. 2, a solid-state battery 100 of the present invention has a configuration in which a plurality of single cell bodies 10 are stacked one on another. That is, a plurality of single cells 10 are stacked so as to increase the dimension in the thickness direction (normal direction with respect to the substrate main surface of the single cell body 10). The present invention is featured by at least a specific stacking aspect of a plurality of single cells.

Specifically, in the present invention, an adhesive layer 40 is provided between the plurality of single cell bodies 10, and the adhesive layer 40 largely covers the cell element 30. That is, the adhesive layer 40 totally covers the positive electrode layer 31, the solid electrolyte layer 34, and the negative electrode layer 37 of each single cell body 10.

In the present invention, the single cell bodies located above and below the adhesive layers are pasted to each other by each of the adhesive layers. For example, in the solid-state battery 100, an adhesive layer 40B bonds a lower single cell body 10B and an upper single cell body 10C to each other. It can be said that the upper single cell body and the lower single cell body are mechanically attached by each adhesive layer. Hence, in the solid-state battery 100 of the present invention, peeling off of the respective single cell bodies from one another can be suppressed by the presence of such an adhesive layer.

In the solid-state battery 100 of the present invention, each of the plurality of adhesive layers 40 is formed of a single layer, but the adhesive layer 40 not only bonds the single cell bodies to each other but also covers the cell element 30 of each single cell body 10. That is, each cell element 30 provided on the substrate 20 is enclosed with the adhesive layer 40 together with the substrate 20.

By the covering with the adhesive layer, in the solid-state battery 100 of the present invention, peeling off of the respective single cell bodies from one another may be further suppressed and the effect of suitably protecting the solid electrolyte layer from the outside air may be exerted. That is, the solid electrolyte layer may be suitably sealed with the adhesive layer 40 so that water vapor in the external environment does not enter the cell element, particularly the solid electrolyte layer. The adhesive layer 40 is preferably a layer exhibiting electrical insulation and may thus exert an action of more suitably securing insulation between the positive and negative electrodes in each single cell. As described above, the adhesive layer 40 in the present invention preferably has a sealing function and/or an insulating function, and it is thus not necessary to additionally provide a sealing layer and/or an insulating layer separately. Hence, in the solid-state battery 100 of the present invention, it is possible to decrease the height or size of the solid-state battery without disadvantageously impairing the volumetric energy density.

As can be seen from the form (particularly the lower view) illustrated in FIG. 2, the adhesive layer 40 is in contact with an upper face 30a of the cell element 30 and also with a side face 30b of the cell element 30. For the side face 30b of the cell element 30, the adhesive layer 40 is preferably in contact with both side faces 30b₁ and 30b₂ of the cell element 30 (excluding the side face portion to be connected to the external electrode). In such a form, the cell element 30 is suitably covered with the adhesive layer 40. Each of the plurality of adhesive layers 40 (namely, each adhesive layer 40 in the form of a single layer) covers the upper faces and the side faces of the positive electrode layer 31, the solid electrolyte layer 34, and the negative electrode layer 37 of each cell element 30 of the plurality of single cell bodies 10.

In a certain suitable aspect, each adhesive layer is widely provided between the plurality of single cell bodies. In particular, the width dimension of the adhesive layer 40 is large since the adhesive layer 40 "covers". Specifically, in the sectional view of the solid-state battery, the width dimension of the adhesive layer 40 is larger than the width dimension of each of the positive electrode layer 31, the negative electrode layer 37, and the solid electrolyte layer 34. This means that the sectional view width dimension of the adhesive layer 40 is larger than any of the layers constituting the cell element 30. In the aspect illustrated in FIG. 2, the adhesive layer 40 is larger when the sectional view width dimension of the adhesive layer 40 and the sectional view width dimension of the positive electrode current collector layer 32 are compared with each other. The adhesive layer 40 is larger when the sectional view width dimension of the adhesive layer 40 and the sectional view width dimension of the positive electrode active layer 33 are compared with each other. The adhesive layer 40 is larger when the sectional view width dimension of the adhesive layer 40 and the sectional view width dimension of the solid electrolyte layer 34 are compared with each other. The adhesive layer 40 is larger when the sectional view width dimension of the adhesive layer 40 and the sectional view width dimension of the negative electrode layer 37 are compared with each other.

The feature of width dimension as described above contributes to the suitable covering of the cell element 30 with the adhesive layer 40, and thus not only the effect of suppressing peeling off but also the improvement of the sealing/insulating functions are easily achieved. Hence, this is likely to lead to the effect of decreasing the height or size of the solid-state battery.

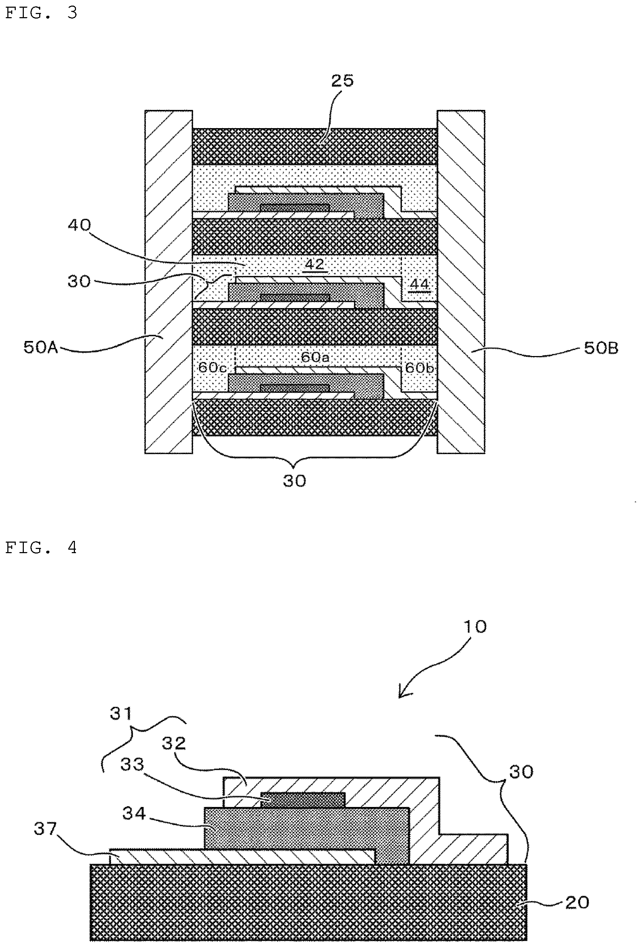

In a certain suitable aspect, the thickness of each adhesive layer between the plurality of single cell bodies is different along the sectional view width direction. That is, since the adhesive layer 40 "covers", the thickness dimension of the adhesive layer 40 is not constant (it can also be said that the thickness dimension of the adhesive layer is locally different) in the sectional view of the solid-state battery. In the aspect illustrated in FIG. 3, one adhesive layer has a "relatively thin part 42" and a "relatively thick part 44". Such a non-constant thickness feature more suitably contributes to the covering of the cell element 30 with the adhesive layer 40, thus the effect of suppressing peeling off and the improvement of the sealing/insulating functions are easily achieved and, as a result, the decrease in height or size of the solid-state battery may be further assisted.

The material for the adhesive layer is preferably a material having high electrical resistance. In this regard, for example, the adhesive layer may contain at least one selected from the group consisting of a vinyl-based resin, an acrylic resin, a polystyrene-based resin, a cyanoacrylate-based resin, a polyurethane-based resin, and an epoxy-based resin. As to be described later as well, the elastic modulus of the adhesive layer is preferably lower than the elastic modulus of each of the substrate, the positive electrode layer, the solid electrolyte layer, and the negative electrode layer. It can also be said that the elastic modulus of the adhesive layer is preferably lower than the elastic modulus of the single cell. This is because the stress that can be applied to the solid electrolyte layer at the time of stacking of the single cell bodies, at the time of use of the solid-state battery, and/or the like can be relieved by the plastic deformation of the adhesive layer.

The solid-state battery of the present invention may be equipped with external electrodes for both positive and negative electrodes on the end faces thereof. The external electrodes electrically connect the respective single cell bodies in parallel. More specifically, the solid-state battery 100 further includes a positive electrode external electrode 50A and a negative electrode external electrode 50B. As illustrated in FIG. 2, the positive electrode external electrode 50A is connected to the positive electrode layer 31 of each of the plurality of single cell bodies 10 and the negative electrode external electrode 50B is connected to the negative electrode layer 37 of each of the plurality of single cell bodies 10. On the positive electrode side, the positive electrode current collector layer 32 of the positive electrode layer 31 is preferably connected to the positive electrode external electrode 50A. For example, as can be seen from FIG. 2, such positive electrode external electrode 50A and negative electrode external electrode 50B may be disposed so as to face each other with a plurality of single cell bodies 10 sandwiched therebetween.

The material for the external electrode is not particularly limited as long as it contains a material exhibiting conductivity. However, it is preferable that the material for the external electrode contain a material exhibiting low hygroscopicity. Examples of the material for the external electrode include at least one metal selected from the group consisting of Ti, Cl, Al, Ni, Sn, Mo, Cu, Ag, Au, Pd, and Pt or an alloy.

As can be seen from the aspect illustrated in FIG. 2, the adhesive layer 40 is preferably provided so as to be in contact with both the positive electrode external electrode 50A and the negative electrode external electrode 50B. In other words, each adhesive layer is widely provided between a plurality of single cell bodies and is thus preferably in the form of being in contact with both the positive electrode external electrode and negative electrode external electrode located at both ends. As illustrated in FIG. 2, it can be said that the sectional view width dimension of each adhesive layer 40 is substantially the same as the sectional view width dimension of the substrate 20 of each single cell body 10. The term "substantially the same" as used herein means not to be limited to the case where the sectional view width dimension of each adhesive layer 40 and the sectional view width dimension of each substrate 20 are the same but to include a mode in which these dimensions are slightly deviated from the same (for example, a mode in which these dimensions are deviated from each other by a few µm or less) as well. Such a form of the adhesive layer more suitably contributes to the covering of the cell element therewith, and thus the effect of suppressing peeling off and the improvement of the sealing/insulating functions are easily achieved.

In the solid-state battery of the present invention, an outer end face 32' of the positive electrode layer 31 (particularly the positive electrode current collector layer 32) may be in contact with an inner side face 50A' of the positive electrode external electrode 50A and an outer end face 37' of the negative electrode layer 37 may be in contact with an inner side face 50B' of the negative electrode external electrode 50B (see the lower view of FIG. 2). In other words, it can be said that the external electrode is covered at the portion that should be electrically connected to the external electrode of the positive electrode layer and negative electrode layer of each single cell. By this, the positive electrode layers/the negative electrode layers of the single cells are connected to one another in parallel and such electrode layers are suitably sealed from the outside air. In this regard, each adhesive layer 40 is widely provided between a plurality of single cell bodies to cover the cell element 30, but the material of the adhesive layer does not reach the portion that should be electrically connected to the external electrodes of the positive electrode layers/the negative electrode layers. Hence, in the solid-state battery of the present invention, the parallel connection of the single cell bodies is not particularly impaired while the cell element 30 is largely covered with the adhesive layer.

When the suitable covering of the adhesive layer is described in relation with the external electrodes, the adhesive layer is densely provided so that gaps or voids are not preferably formed between the external electrode and the cell element. That is, in the region between the plurality of single cell bodies, each adhesive layer is densely filled so as not to substantially leave a gap or a void. As can be seen from FIGS. 2 and 3, the region surrounded by the positive electrode external electrode 50A, the cell element 30, and the negative electrode external electrode 50B is wholly filled with the adhesive layer 40. When the covering is described using the sectional view of FIG. 3, not only "a region 60a between the upper face of the cell element 30 and the substrate adjacent thereto" but also "a region 60b between one side face of the cell element 30 and the negative electrode external electrode 50B adjacent thereto" and "a region 60c between the other side face of the cell element 30 and the positive electrode external electrode 50A adjacent thereto" are filled with the adhesive layers.

The solid-state battery according to an embodiment of the present invention can be realized in various aspects. This will be described below.

### (Low elastic modulus of adhesive layer)

This aspect is an aspect in which the elastic modulus of the adhesive layer is suitably low. Specifically, the elastic modulus of the adhesive layer 40 is lower than the elastic modulus of each of the substrate 20, the positive electrode layer 31, the negative electrode layer 37, and the solid electrolyte layer 34 (in particular, the elastic modulus of the adhesive layer 40 is lower than the elastic moduli of the respective thin films on the substrate 20, namely, the elastic modulus of each of the positive electrode layer 31, the negative electrode layer 37, and the solid electrolyte layer 34).

That is, the elastic modulus of the adhesive layer 40 is lower than those of the substrates 20 of the plurality of single cell bodies 10 and the respective cell elements 30. In short, it can be said that the elastic modulus of each adhesive layer 40 is lower than the elastic modulus of each single cell body.

Such a low elastic modulus of the adhesive layer works significantly with respect to the cell element of the single cell body. For example, when the single cell bodies are stacked one on another to obtain a solid-state battery, the stacked single cell bodies are pressed from the outside. At that time, the stress applied to the cell element of the single cell body can be relieved. This is because the adhesive layer having a relatively low elastic modulus may be deformed (particularly plastically deformed) by the action of the pressing. This significant effect may be exerted not only during the manufacture of the solid-state battery but also after the manufacture. That is, when a solid-state battery is put in the environment where an external force works as well, deformation (particularly plastic deformation) of the adhesive layer having a relatively low elastic modulus diminishes the stress applied to the cell element (for example, the solid electrolyte layer included therein) of the single cell body.

The low elastic modulus of the adhesive layer may also contribute to the prevention of cracking in the solid-state battery. When a solid-state battery is charged/discharged, the electrode layer may expand/contract along with the movement of ions between the positive and negative electrode layers through the solid electrolyte layer. When the adhesive layer is excessively hard, cracking may occur in the electrode layers and the like by the stress due to this expansion/contraction. In this regard, when the elastic modulus of the adhesive layer is relatively low (that is, the adhesive layer is easily deformed), the stress of such expansion/contraction is relieved and this can suppress the occurrence of cracking.

The elastic modulus of the adhesive layer 40 is preferably considerably lower than the elastic modulus of each thin film on the substrate, and is lower than the elastic modulus of each of the positive electrode layer 31, the negative electrode layer 37, and the solid electrolyte layer 34 by preferably 80% or more, more preferably 95% or more. The difference between the elastic modulus of the substrate 20 and the elastic modulus of the adhesive layer 40 may not be as large as the difference between the elastic modulus of each thin film on the substrate and the elastic modulus of the adhesive layer 40, and thus the elastic modulus of the adhesive layer 40 may be slightly lower than the elastic modulus of the substrate 20. The specific elastic modulus of the adhesive layer 40 is, for example, about 15 GPa or less, for example, about 10 GPa or less.

An example of the specific elastic moduli is presented below. When certain materials are taken as the respective materials for the solid-state battery as an example, for example, the following elastic moduli may be assumed (the following is merely an example for better understanding of the invention, and the materials and elastic moduli listed below do not limit the invention).

### Adhesive layer

HS-270 (manufactured by Showa Denko Materials Co., Ltd.): 1 GPa (25°C/after curing)

### Substrate

Polyamide: 13 GPa
Polyimide: 3.5 GPa
PET: 4GPa

### Positive electrode layer (particularly positive electrode current collector layer)

Ti: 107GPa
Mg: 45GPa
W: 345GPa

### Solid electrolyte layer

LiPON: 77GPa

### Negative electrode layer (particularly negative electrode current collector layer)

Ti: 107GPa
Cu: 110GPa

In the present specification, the "elastic modulus" refers to the so-called Young's modulus [Pa]. The Young's modulus means a value measured by the following method in particular.
Adhesive layer and substrate (resin): method based on JIS K 7127 (tensile test)
Positive electrode active layer and negative electrode layer (metal): method based on JIS Z 2280 (resonance method)
Solid electrolyte layer and positive electrode current collector layer: nano indenter method (Thin Solid Films 520 (1): 413-418)

### (Adhesive layer containing thermoplastic resin)

This aspect is an aspect in which the adhesive layer is a layer formed using a thermoplastic resin. The thermoplastic resin is a resin that softens when being heated, and this property is suitably utilized in the present aspect.

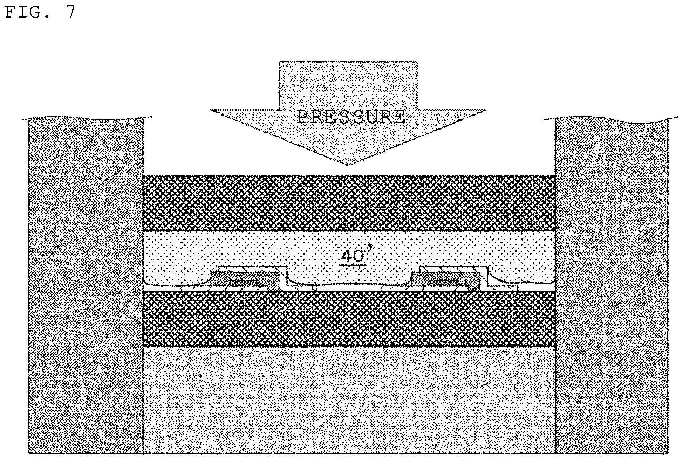

As described above, in order to manufacture a solid-state battery, it is necessary to press the stacked single cell bodies from the outside, but the soft adhesive layer (more specifically, a precursor 40' thereof) is likely to more suitably cover the cell element 30 of the single cell body 10 (see FIG. 7). This is because the precursor of the adhesive layer is easily displaced along the contour of the cell element 30 by the external force.

Hence, when a thermoplastic resin is used to form the adhesive layer and the stacked single cell bodies are pressed from the outside, it is only required that the resin is kept in a softened state by heating or the like. This makes it easier to suitably cover the cell element 30 of the single cell body 10.

The thermoplastic resin used for the adhesive layer is not particularly limited. The thermoplastic resin may be, for example, a polyethylene resin, a polypropylene resin, a vinyl chloride resin, polystyrene, an ABS resin, a methacrylic resin, polyethylene terephthalate and the like. Such a thermoplastic resin may be a single resin or a mixture resin composed of two or more of these resins.

### (Stacked location of positive electrode/negative electrode in single cell body)

This aspect is an aspect related to the stacked form of the positive electrode and negative electrode of the single cell body. In the single cell body included in the solid-state battery of the present invention, one of the positive electrode layer or the negative electrode layer is only required to be stacked on the other with the solid electrolyte layer interposed therebetween on the substrate.

Hence, as illustrated in FIGS. 1 and 2, in the cell element of each single cell body, the positive electrode current collector layer 32, the positive electrode active layer 33, the solid electrolyte layer 34, and the negative electrode layer 37 may be stacked on the substrate 20 in this order. That is, in the cell element of each single cell body, the positive electrode layer, the solid electrolyte layer, and the negative electrode layer may be stacked in this order from the side closer to the substrate. In such a case, the width dimension of each layer in the sectional view of the solid-state battery is preferably positive electrode layer < solid electrolyte layer < negative electrode layer. This is because the moisture absorption of the solid electrolyte can be suppressed. That is, as illustrated in the drawing, preferably in a form in which the solid electrolyte layer is surrounded so that the negative electrode layer largely covers the solid electrolyte layer, the moisture absorption of the solid electrolyte may be suppressed. When there is the width dimension relation of positive electrode layer < solid electrolyte layer < negative electrode layer, the effect that the insulation of the positive and negative electrodes may be more reliably secured by the solid electrolyte layer may also be exerted in each cell element.

The cell element 30 of each single cell body 10 is not limited to the one illustrated in FIG. 1, and may be the one illustrated in FIG. 4. Hence, in the cell element 30 of each single cell body 10, the negative electrode layer 37, the solid electrolyte layer 34, the positive electrode active layer 33, and the positive electrode current collector layer 32 may be stacked on the substrate 20 in this order (see FIG. 4). This means that the negative electrode layer, the solid electrolyte layer, and the positive electrode layer may be stacked in this order from the side closer to the substrate in the cell element of each single cell body. In such a case as well, each single cell body can be charged/discharged, and a solid-state battery may be similarly provided as a secondary battery. In such a case, the width dimension of each layer in the sectional view of the solid-state battery is preferably negative electrode layer < solid electrolyte layer < positive electrode layer. Similar to the above, the effect of suppressing the moisture absorption of the solid electrolyte can be expected.

### (Reversed stacking of single cell body)

This aspect is an aspect in which a certain single cell body among a plurality of single cell bodies in a solid-state battery is stacked in a reversed state. That is, this aspect is an aspect in which the surfaces on which the cell elements are provided (hereinafter, also referred to as "cell element surfaces") are not all oriented in the same direction in the plurality of single cell bodies.

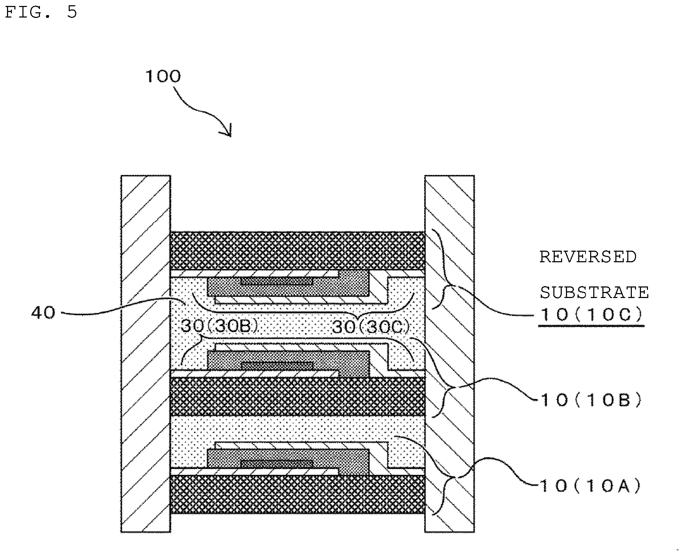

More specifically, as illustrated in FIG. 5, the orientation of the cell element surface of a certain single cell body 10 may be opposite to the orientations of the cell element surfaces of other single cell bodies 10. In such an aspect, preferably a single adhesive layer covers both the upper and lower cell elements.

As illustrated in FIG. 5, for example, the orientation of the cell element surface of the single cell body 10C that is positioned at the top is opposite to the orientations of the cell element surfaces of the other single cell bodies 10A and 10B below the cell element surface. The adhesive layer 40 located between the single cell body 10C and the single cell body 10B is in the form of a single layer, but covers both the upper cell element 30C and the lower cell element 30B. In this aspect, the effect of diminishing the degree of exposure of the cell element of the single cell body at the uppermost location to the outside may be exerted.

That is, when the orientations of the cell element surfaces of the single cell bodies are all the same, the cell element of the single cell body at the uppermost location may be in a state in which the substrate may not be positioned on the outer side of the cell element but the adhesive layer may be exposed. In order to avoid such a state, it is considered to provide an additional substrate 25 on the outer side thereof (see FIG. 3). On the other hand, when the orientation of the cell element surface at the uppermost location is reversed, the adhesive layer is not exposed from the start and this leads to an advantage of not being necessary to include such an additional substrate.

### [Method for manufacturing solid-state battery]

The manufacturing method of the present invention is a method for manufacturing the above-described solid-state battery. The solid-state battery is manufactured by stacking a plurality of single cell bodies one on another, and the manufacturing method of the present invention includes the following steps.

(i) A step of fabricating a single cell body including a substrate and a cell element provided on the substrate, in which one of a positive electrode layer or a negative electrode layer is stacked on the other with a solid electrolyte layer interposed therebetween in the cell element; and (ii) a step of pasting a plurality of single cell bodies to one another with an adhesive layer interposed therebetween.

The present invention is at least featured by the pasting of the single cell bodies to one another with an adhesive layer interposed therebetween in step (ii). Specifically, in step (ii), a precursor of the adhesive layer is provided between the plurality of single cell bodies, a pressing force is applied to the plurality of single cell bodies, and the cell element is covered with the adhesive layer.

In the present invention, while a plurality of single cell bodies are pasted to one another with an adhesive, the cell element of each single cell is covered with the adhesive used for the pasting. In particular, since the cell element is provided on the substrate in each single cell, it can be said that each cell element 30 is covered with each adhesive so as to be wrapped with the adhesive together with the substrate.

First, a single cell body is prepared when the present invention is carried out. That is, as step (i), a single cell is obtained by stacking one of the positive electrode layer or the negative electrode layer on the other with the solid electrolyte layer interposed therebetween on the substrate to form a cell element.

More specifically, for example, the positive electrode current collector layer 32, the positive electrode active layer 33, the solid electrolyte layer 34, and the negative electrode layer 37 are sequentially formed on the substrate 20. The cell element 30 as a thin film stacked body is thus formed on the substrate 20 (see FIG. 1).

The substrate 20 to be used is not particularly limited as long as it serves as a support for the thin films.

For example, a substrate formed of an electrically insulating material such as glass, alumina, or resin may be used as described above.

The respective thin films of the positive electrode current collector layer 32, the positive electrode active layer 33, the solid electrolyte layer 34, and the negative electrode layer 37 can be formed by, for example, gas phase methods such as a PVD (Physical Vapor Deposition) method, a CVD (Chemical Vapor Deposition) method, and/or an ALD (Atomic Layer Deposition) method. The respective thin films can also be formed by coating methods such as spin coating and/or screen printing and/or liquid phase methods such as electroplating, electroless plating, a sol-gel method, and/or MOD (Metal Organic Decomposition). The respective thin films can also be formed by solid phase methods such as an SPE (solid phase epitaxy) method and/or an LB (Langmuir-Blodgett) method.

The PVD method is a method in which a thin film raw material to be formed into a thin film is once evaporated/vaporized by energy such as heat and/or plasma, and then formed into a thin film on a substrate. Examples of the PVD method include a vacuum deposition method, a sputtering method, an ion plating method, an MBE (molecular beam epitaxy) method, and/or a laser ablation method.

The CVD method is a method in which energy such as heat, light, and/or plasma is applied to the constituent materials of the thin film supplied as gases to form decomposition/reaction/intermediate products of the raw material gas molecules and a thin film is deposited on the substrate surface through adsorption, reaction, and detachment. Examples of the CVD method include a thermal CVD method, an MOCVD (Metal Organic Chemical Vapor Deposition) method, an RF plasma CVD method, an optical CVD method, a laser CVD method, and/or an LPE (Liquid Phase Epitaxy) method.

The above-described thin film forming method itself is a known method, and it can be thus said that those skilled in the art can form each layer constituting the cell element by the thin film forming method. Hence, the positive electrode current collector layer 32, the positive electrode active layer 33, the solid electrolyte layer 34, and the negative electrode layer 37 can be sequentially formed on the substrate 20 by carrying out such a thin film forming method, and a single cell body including a cell element can be thus obtained.

In step (ii), the obtained plurality of single cell bodies are stacked one on another. Specifically, a battery precursor stacked body in a state in which a precursor of the adhesive layer is sandwiched between the single cell bodies is first obtained, and then an external force is applied to the battery precursor stacked body. The external force is preferably applied along the stacking direction of the battery precursor stacked body, and it is preferable that the battery precursor stacked body be compressed along that direction. In short, it is preferable to apply an external force so that the battery precursor stacked body can be pressed from above and below.

A press die may be used to apply such an external force. That is, a mold composed of a pair of upper and lower molds may be used. The upper mold and the lower mold can be driven so as to relatively come closer to each other or be separated from each other, and the battery precursor stacked body can be pressed between these molds.

The precursor of the adhesive layer can be obtained by providing the adhesive layer raw material on the whole surface of each single cell body. For example, a precursor of the adhesive layer may be obtained by applying an adhesive to the whole surface of each single cell body. When a liquid adhesive is used, a spray gun method, a flow coating method, a printing method, or the like can be used for coating.

It is necessary not to apply the adhesive to the portion that is finally electrically connected to the external electrode of the positive electrode layer/negative electrode layer of each single cell body. In order to achieve this purpose, a region to which the adhesive is not applied may be set in advance using a mask or the like. Once the adhesive is applied to the whole single cell, and then the end faces of the positive electrode layer and the negative electrode layer may be subjected to cutting and/or polishing.

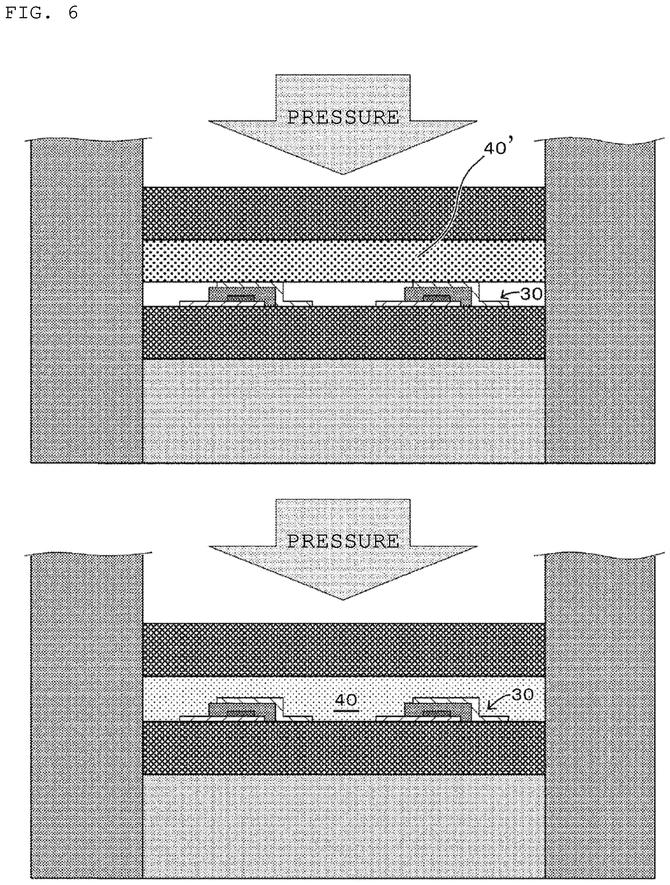

In a certain suitable aspect, the precursor of the adhesive layer is in the form of a film. That is, an adhesive previously molded into a film shape or a sheet shape may be used. In particular, the precursor of the film-like adhesive layer preferably has a wide main surface that can cover the whole surface of each single cell body. The thickness of such a precursor of the adhesive layer may be a constant thickness. When the battery precursor stacked body is pressed in step (ii), the precursor 40'of the film-like adhesive layer is deformed by the external force from the surroundings, and the cell element 30 is covered through this (see FIG. 6). In particular, the precursor 40' of the film-like adhesive layer abuts on the cell element 30 and at least a part of the shape thereof is changed so that the precursor 40' finally follows the contour of the cell element 30. That is, the covering of the cell element with the adhesive layer is suitably brought about through at least the displacement of a part of the precursor of the film-like adhesive layer. When the precursor of the film-like adhesive layer is used, the handling of the adhesive layer raw material is easy, and thus a simple manufacturing process may be provided. As the precursor of the film-like adhesive layer, a commercially available one may be used (HS270 manufactured by Showa Denko Materials Co., Ltd. can be used although this is merely one example).

In another suitable aspect, a material that can be softened is used as a precursor of the adhesive layer. In this case, when the battery precursor stacked body is pressed in step (ii), the precursor 40' of the adhesive layer is particularly easily deformed (see FIG. 7) and the cell element is likely to be more suitably covered with the adhesive layer. For example, when the precursor of the adhesive layer contains a thermoplastic resin, the precursor of the adhesive layer may be heated to temporarily soften the precursor.

A heating chamber may be used for heating, or a heater means installed in a press die or the like may be used. When a heating chamber is used, the battery precursor stacked body to be placed in the press die can be heated by disposing the press die inside the heating chamber, and thus the precursor of the adhesive layer of the battery precursor stacked body can be heated.

The precursor of the adhesive layer that has been softened by heating may be cooled after the battery precursor stacked body is pressed. The cooling itself is not particularly limited, but may be natural cooling. For example, after each cell element is covered with the precursor of the adhesive layer by pressing the battery precursor stacked body, the battery precursor stacked body may be cooled through natural cooling or the like to obtain a desired adhesive layer.

In the following, for better understanding of the present invention, one exemplary manufacturing method will be described with reference to the drawings, but the present invention is not limited to this method. In addition, the following time-dependent matters such as the order of description are merely for convenience of explanation and are not necessarily bound by them.

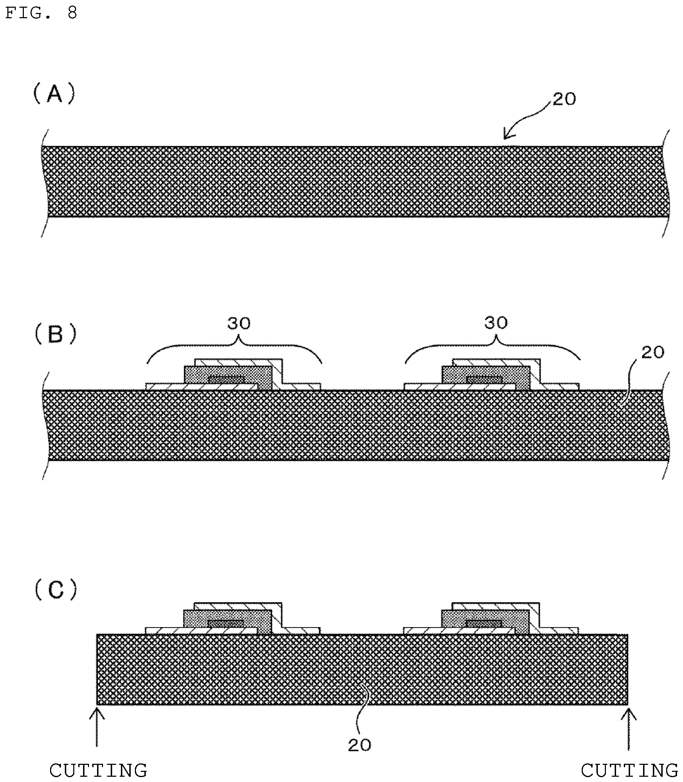

First, as illustrated in FIGS. 8(A) and 8(B), at least one cell element 30 is configured on the main surface of the substrate 20. For example, two or more cell elements 30 are formed on a single substrate.

Next, the cutting treatment is performed so as to have a size suitable for the pressing treatment to be performed later. For example, cutting is performed so as to have the size of the press die (see FIG. 8(C)). That is, the substrate 20 is cut so as to have a size suitable for placement inside the press die.

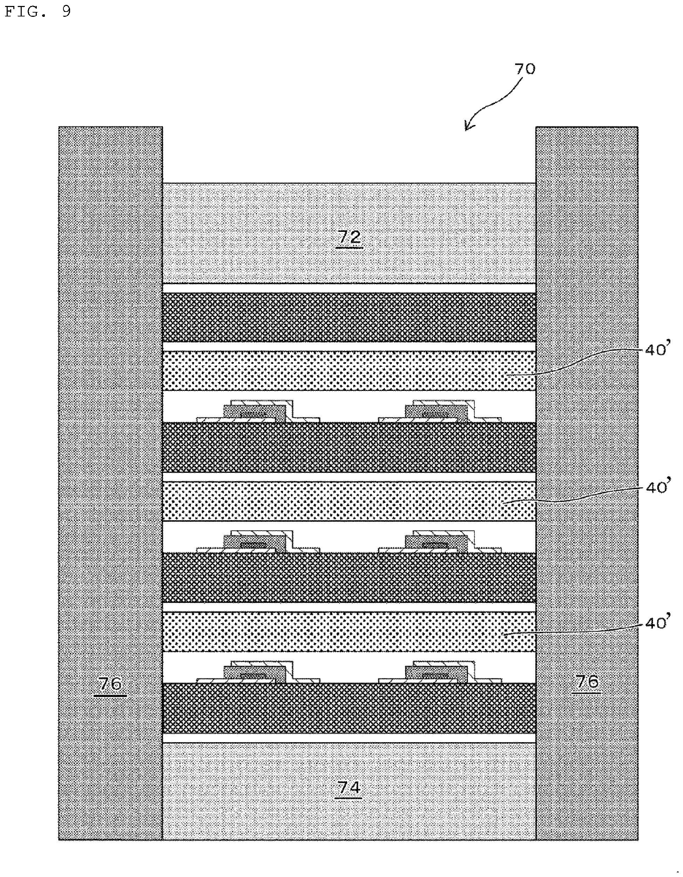

Next, a plurality of single cell bodies are stacked one on another so that the precursor 40' of the adhesive layer is interposed therebetween to obtain a battery precursor stacked body. This battery precursor stacked body may also be subjected to a cutting treatment if necessary. The obtained battery precursor tacked body is placed in a mold 70 as illustrated in FIG. 9 (in FIG. 9, the precursor 40' is illustrated separately from the single cell body so that the interposition of the precursor 40' of the adhesive layer is easily understood). The stacking of the single cell bodies may be performed on all the layers of the battery precursor stacked body at the same time, but may be performed sequentially one layer at a time. The precursor 40' of the adhesive layer may be any one as long as it can be interposed between the single cell bodies in the battery precursor stacked body. In the aspect illustrated in FIG. 9, a film-like (or sheet-like) adhesive member is used as the precursor 40' of the adhesive layer. As such an adhesive member, for example, a flexible member may be used. In the illustrated aspect, the mold 70 is composed of a pair of upper mold 72 and lower mold 74 and a sleeve mold 76, and the upper mold 72 and the lower mold 74 can be driven so as to relatively come closer to each other or be separated from each other.

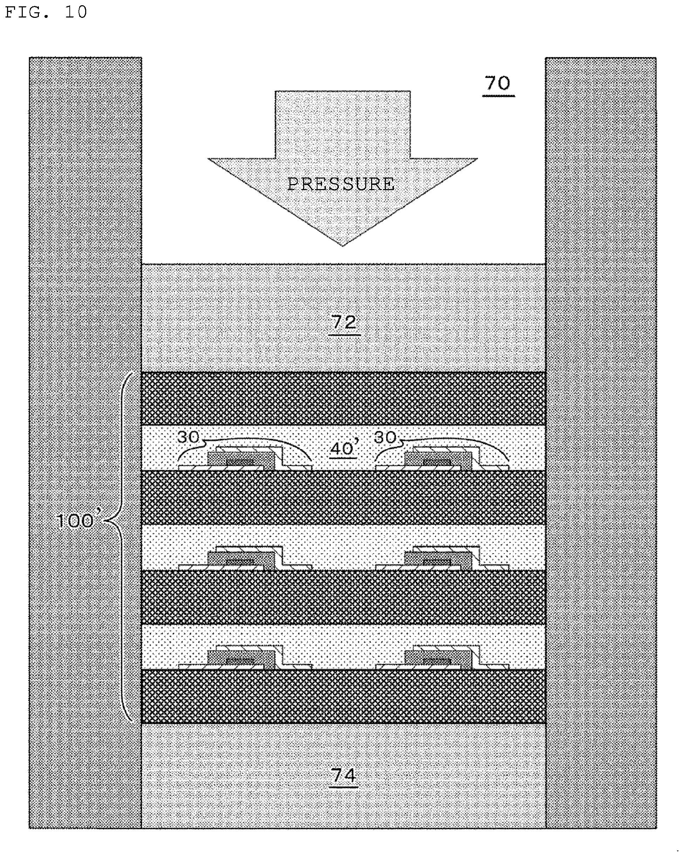

Next, an external force is applied to the battery precursor stacked body in the vertical direction. For example, as illustrated in FIG. 10, the mold is driven so that the pair of upper mold 72 and lower mold 74 come close to each other to apply an external force to a battery precursor stacked body 100'. This applies the external force to the precursor 40' of the adhesive layer to cause displacement and/or deformation, and finally the cell element 30 of each single cell is covered with the adhesive layer. That is, preferably the upper face and side face of the cell element of each single cell body are covered with the adhesive layer. More preferably, the upper face and side face of the cell element of each single cell body are covered with the adhesive layer so that gaps or voids are not formed between the external electrodes and the cell element.

When the precursor of the adhesive layer finally undergoes curing, the precursor of the adhesive layer may be cured while applying an external force to the battery precursor stacked body in the vertical direction. Such a curing treatment may be performed when a film-like/sheet-like adhesive member is used, but is particularly preferably performed when a paste-like or liquid-like adhesive is used. That is, after the adhesive is applied to each single cell to paste the single cells to one another, the adhesive may be cured while applying an external force from above and below the single cells.

This makes it possible to relieve the influence of contraction due to the curing of the adhesive and to suppress/diminish the disadvantageous phenomena such as warpage in the finally obtained solid-state battery. Furthermore, it can be expected to have an effect of suppressing warpage due to a difference in linear expansion coefficient among the adhesive layer, the substrate, the positive electrode layer, the solid electrolyte layer, and/or the negative electrode layer.

The precursor of the adhesive layer may be cured by the action of a pressing force. For example, in the aspect illustrated in FIG. 10, the upper mold 72 and the lower mold 74 are brought close to each other so that the cell element 30 of each single cell is once covered with the precursor 40' of the adhesive layer and then the state of the molds may be maintained until the curing of the precursor of the adhesive layer is completed. This makes it possible to relieve the influence of contraction due to the curing of the precursor of the adhesive layer and to suppress the warpage that may occur in the battery precursor stacked body.

As can be seen from such description, the "curing" in the above not only means "curing" when one containing a thermosetting resin and a photocurable resin that is visible light/ultraviolet curable is used as a precursor of the adhesive layer but also means a case in which the thermoplastic resin is once softened by heating and then solidified by removing heat/lowering the temperature when a thermoplastic resin is contained as a precursor of the adhesive layer.

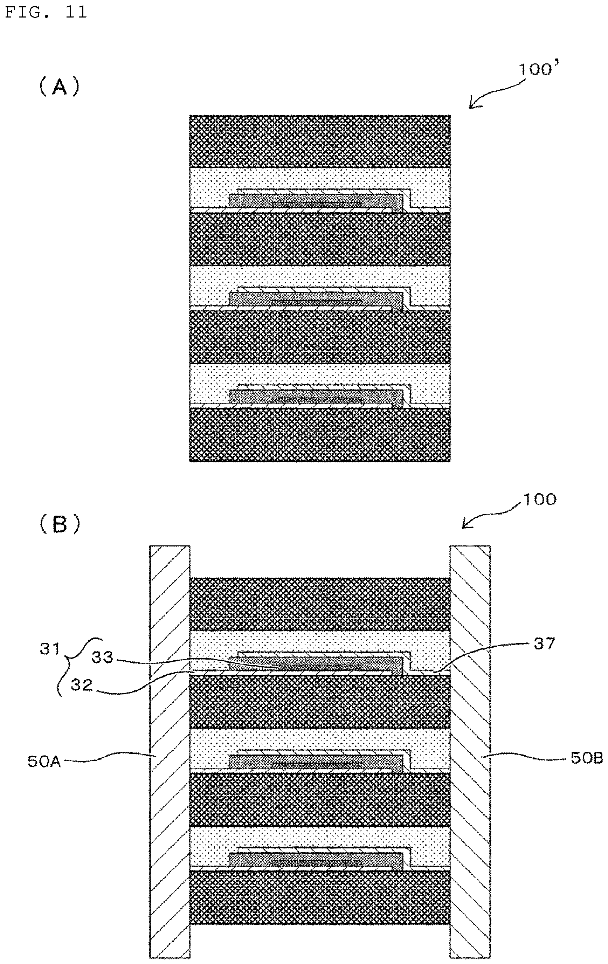

When the pressing treatment performed on the battery precursor stacked body 100' is completed, the battery precursor stacked body 100' is taken out from the mold 70 and separated into an individual piece (FIGS. 10 and 11(A)). In particular, the cutting treatment is performed so that a stacked body in which only one row of cell elements 30 are stacked along the thickness direction is obtained. Thereafter, the external electrodes 50A and 50B are formed on the battery precursor stacked body 100' separated into an individual piece (see FIG. 11(B)).

As illustrated in FIGS. 11(A) and 11(B), the external electrodes 50A and 50B are formed so as to form a pair at the opposite end faces of the battery precursor stacked body 100'. Specifically, the positive electrode external electrode 50A is formed so as to be connected to the positive electrode layer 31 of each of the plurality of single cell bodies 10 and the negative electrode external electrode 50B is formed so as to be connected to the negative electrode layer 37 of each of the plurality of single cell bodies 10. The formation of the external electrodes 50A and 50B itself may be performed by a gas phase method such as PVD (including a vapor deposition method, a sputtering method, and the like), CVD, or ALD or a liquid phase method such as a coating method or a dip coating method.

By carrying out the steps described above, a desired solid-state battery can be finally obtained. In other words, it is possible to obtain the solid-state battery 100 in which a plurality of single cell bodies are stacked one on another and each adhesive layer located between these single cell bodies covers each cell element.

Matters related to the method for manufacturing a solid-state battery according to the present invention or more detailed matters are described in the above-described [Solid-state battery], and thus the description thereof will be omitted in order to avoid duplication.

The embodiments of the present invention have been described above, but they merely exemplify typical examples. Hence, those skilled in the art will easily understand that the present invention is not limited to this, and various aspects can be considered without changing the gist of the present invention.

For example, in FIGS. 2 and 3 referred to in the above description, the number of single cell bodies included in the solid-state battery is three, but the present invention is not necessarily limited to this. This number of three is merely for convenience of explanation of the invention.

Hence, the number of single cell bodies included in the solid-state battery in the present invention may be fewer than 3 (namely, 2) or more than 3.

The solid-state battery is described on the premise that the solid-state battery have the constituents as illustrated in FIG. 2 or 3, but the present invention is not necessarily limited to this. For example, a protective film formed of an inorganic material may be additionally formed on the upper and lower faces or side faces of a solid-state battery having a configuration as illustrated in FIG. 3. The material for the protective film is preferably one that exhibits low hygroscopicity, and examples thereof include SiN and/or SiO₂.

### INDUSTRIAL APPLICABILITY

The solid-state battery of the present invention can be utilized in various fields where power storage is assumed. Although merely an example, the solid-state battery of the present invention can be utilized in the fields of electricity/information/communication in which electric and electronic devices are used (for example, electric and electronic device fields or mobile device field including mobile phones, smartphones, notebook computers and digital cameras, activity meters, arm computers, electronic paper, and the like, small electronic devices such as RFID tags, card-type electronic money, and smart watches, and the like), home/small-scale industrial applications (for example, fields of power tools, golf carts, home/nursing/industrial robots), large-scale industrial applications (for example, fields of forklifts, elevators, port cranes), transportation system fields (for example, fields of hybrid vehicles, electric vehicles, buses, trains, electrical power assisted bicycles, electric motorcycles, and the like), power system applications (for example, fields of various kinds of power generation, load conditioners, smart grids, general household power storage systems, and the like), medical applications (medical equipment fields such as earphone hearing aid), medicinal applications (fields of dose management system and the like), IoT field, space/deep sea applications (for example, fields of space probes, submersible research vehicles, and the like), and the like.

### DESCRIPTION OF REFERENCE SYMBOLS

10: Single cell/single cell body
20: Substrate
25: Additional substrate
30: Cell element
30a: Upper face of cell element
30b: Side face of cell element
30b_{1:} Side face of cell element (side face on proximal side of positive electrode external electrode)
30b_{2:} Side face of cell element (side face on proximal side of negative electrode external electrode)
31: Positive electrode layer
32: Positive electrode current collector layer
33: Positive electrode active layer
34: Solid electrolyte layer
37: Negative electrode layer
40: Adhesive layer
42: Relatively thin part of adhesive layer
44: Relatively thick part of adhesive layer
50A: Positive electrode external electrode
50B: Negative electrode external electrode
60a: Region between cell element and upper substrate
60b: Region between cell element and negative electrode external electrode
60c: Region between cell element and positive electrode external electrode
70: Mold
72: Upper mold
74: Lower mold
76: Sleeve mold
100: Solid-state battery

## Claims

1. A solid-state battery comprising a plurality of single cell bodies stacked one on another, wherein
each of the single cell bodies includes a substrate and a cell element provided on the substrate,
one of a positive electrode layer or a negative electrode layer is stacked on the other with a solid electrolyte layer interposed therebetween in the cell element,
an adhesive layer is provided between the plurality of single cell bodies, and the adhesive layer covers the cell element.

2. The solid-state battery according to claim 1, wherein the adhesive layer is in contact with an upper face of the cell element and also with a side face of the cell element.

3. The solid-state battery according to claim 1 or 2, wherein an elastic modulus of the adhesive layer is lower than an elastic modulus of each of the substrate, the positive electrode layer, the solid electrolyte layer, and the negative electrode layer.

4. The solid-state battery according to any one of claims 1 to 3, wherein the adhesive layer contains a thermoplastic resin.

5. The solid-state battery according to any one of claims 1 to 4, wherein a width dimension of the adhesive layer is larger than a width dimension of each of the positive electrode layer, the negative electrode layer, and the solid electrolyte layer in sectional view.

6. The solid-state battery according to any one of claims 1 to 5, wherein a thickness dimension of the adhesive layer is not constant in sectional view.

7. The solid-state battery according to any one of claims 1 to 6, wherein the positive electrode layer has a two-layer structure consisting of a positive electrode current collector layer and a positive electrode active layer while the negative electrode layer is formed of a single layer.

8. The solid-state battery according to claim 7, wherein the positive electrode current collector layer, the positive electrode active layer, the solid electrolyte layer, and the negative electrode layer are stacked on the substrate in this order.

9. The solid-state battery according to any one of claims 1 to 8, further comprising a positive electrode external electrode and a negative electrode external electrode, wherein
the positive electrode external electrode is connected to the positive electrode layer of each of the plurality of single cell bodies,
the negative electrode external electrode is connected to the negative electrode layer of each of the plurality of single cell bodies, and
the adhesive layer is in contact with both the positive electrode external electrode and the negative electrode external electrode.

10. The solid-state battery according to claim 9, wherein an outer end face of the positive electrode layer is in contact with an inner face of the positive electrode external electrode and an outer end face of the negative electrode layer is in contact with an inner face of the negative electrode external electrode.

11. The solid-state battery according to claim 9 or 10, wherein a region surrounded by the positive electrode external electrode, the cell element, and the negative electrode external electrode is wholly filled with the adhesive layer.

12. A method for manufacturing a solid-state battery including a plurality of single cell bodies stacked one on another, the method comprising:
(i) a step of fabricating a single cell body including a substrate and a cell element provided on the substrate, wherein one of a positive electrode layer or a negative electrode layer is stacked on the other with a solid electrolyte layer interposed therebetween in the cell element; and
(ii) a step of pasting a plurality of the single cell bodies to one another with an adhesive layer interposed therebetween, wherein
a precursor of the adhesive layer is provided between the plurality of single cell bodies and a pressing force is applied to the plurality of single cell bodies to cover the cell element with the adhesive layer in the step (ii).

13. The method for manufacturing a solid-state battery according to claim 12, wherein the precursor of the adhesive layer is in a form of a film and the cell element is covered with the adhesive layer by displacing at least a part of the precursor.

14. The method for manufacturing a solid-state battery according to claim 12 or 13, wherein the precursor of the adhesive layer is heated to be temporarily softened in the step (ii).

15. The method for manufacturing a solid-state battery according to any one of claims 12 to 14, wherein the precursor of the adhesive layer is cured by an action of the pressing force.
